## Europäisches Patentamt
## European Patent Office
## Office européen des brevets

(19)

(11) Veröffentlichungsnummer: **0 019 691**
**B1**

(12) **EUROPÄISCHE PATENTSCHRIFT**

(45) Veröffentlichungstag der Patentschrift:
**18.05.83**

(21) Anmeldenummer: **80101431.7**

(22) Anmeldetag: **19.03.80**

(51) Int. Cl.³: **F 03 D 1/06,** B 64 C 27/46

(54) Aus einzelnen Abschnitten gefertigtes Rotorblatt.

(30) Priorität: **25.05.79 DE 2921152**

(43) Veröffentlichungstag der Anmeldung:
**10.12.80 Patentblatt 80/25**

(45) Bekanntmachung des Hinweises auf die Patenterteilung:
**18.05.83 Patentblatt 83/20**

(84) Benannte Vertragsstaaten:
**FR GB NL SE**

(56) Entgegenhaltungen:
**DE-C-943 880**
**FR-A-888 216**
**NL-C-14 424**

(73) Patentinhaber: **Messerschmitt-Bölkow-Blohm Gesellschaft mit beschränkter Haftung, Postfach 801109, D-8000 München 80 (DE)**

(72) Erfinder: **Döllinger, Rolf, Ing. grad., Birkensteiner Strasse 58, D-8153 Fischbachau (DE)**
Erfinder: **Schindler, Rudolf, Ing. grad., Albrecht-Dürer-Strasse 1, D-8014 Neubiberg (DE)**
Erfinder: **Franz, Dieter, Ing. grad., Grafengars 46, D-8261 Jettenbach (DE)**

## Aus einzelnen Abschnitten gefertigtes Rotorblatt

Bei aus einzelnen Abschnitten gefertigten Rotorblättern sind die einzelnen Abschnitte an einem Holm entweder einzeln befestigt oder auf den Holm aufgesteckt und dann insgesamt verspannt (vgl. DE-B-1 406 443 bzw. FR-A-888 216). Diese Rotorblätter sind für Hubschrauber konzipiert, wobei eine einfache Herstellung und hohe Elastizität der Rotorblätter angestrebt wird.

In letzter Zeit wird erneut versucht, Strom mit Windkraftwerken zu erzeugen. Eine Möglichkeit besteht darin, an einem windreichen Ort einen hohen Mast aufzustellen, der einen Rotorflügel mit z.B. zwei Rotorblättern trägt; der vom Wind angetriebene Rotorflügel treibt dann einen Stromgenerator. Die Rotorblätter derartiger Flügel haben eine Länge von teilweise 60 Metern und wiegen dementsprechend je nach verwendetem Material bis zu 20 Tonnen. Für Rotorblätter mit diesen Ausmassen können die bekannten Konstruktionsprinzipien nur bedingt übernommen werden, schon allein deshalb, da für Rotorflügel von Hubschraubern bzw. Windkraftwerken andere Bedingungen hinsichtlich der Elastizität bzw. Steifigkeit der Rotoren gegeben sind. Aufgrund der Grösse der Rotorblätter für Windkraftwerke ergeben sich Probleme bei Herstellung, Montage und im Betrieb.

Aus der DE-C-943 880 ist es schon bekannt, ein aus einzelnen Abschnitten gefertigtes Rotorblatt zu verwenden, in dem die Abschnitte jeweils ein in Längsrichtung des Rotorblattes sich erstreckendes Druckelement in Form eines Holmabschnittes aufweisen.

Es ist vorgeschlagen worden, solche Rotorblätter einstückig aus faserverstärkten Kunststoffen herzustellen, da diese hinsichtlich Festigkeit und Gewicht Vorteile bieten. Zur Herstellung eines Rotorblattes wären demnach zumindest speziell anzufertigende Fertigungstische von etwa 60 Meter Länge sowie gleich lange Autoklaven notwendig, in denen die fertigen Rotorblätter bei Temperaturen zwischen 100 °C und 250 °C heissgehärtet werden.

Auch der Transport und die Montage derartiger einstückiger Rotorblätter bzw. der Rotorflügel ist allein wegen der grossen Länge kompliziert. Da der Rotorflügel an dem Mast auch bei Wind montiert werden muss, müssen auch die Windkräfte durch entsprechende Montagehilfen beherrscht werden.

Wird das eingangs erwähnte Konstruktionsprinzip von Hubschrauberrotorblätter aus einzelnen Abschnitten übernommen, so kann zwar die Fertigung dieser einzelnen Abschnitte erleichtert werden; die Montage der einzelnen Abschnitte auf dem im allgemeinen aus Stahlrohr hergestellten Blattholm, der Transport des fertigen Rotorblattes und auch dessen Montage an dem Mast verbleiben kompliziert.

Im Betrieb schliesslich ist ein Rotorflügel eines Windkraftwerkes extrem hohen Beanspruchungen ausgesetzt. So erreichen etwa die Blattspitzen des Rotors Geschwindigkeiten bis zu 150 Meter pro Sekunde; die auftretenden Zentrifugal- und auch Torsionskräfte müssen durch das Blattmaterial einwandfrei aufgefangen werden.

Der Erfindung liegt die Aufgabe zugrunde, ein Rotorblatt so auszubilden, dass auch grosse Blätter einfach hergestellt und montiert werden können; ausserdem sollen die Rotorblätter gute mechanische Eigenschaften aufweisen, so dass sie auch hohen Beanspruchungen Stand halten.

Diese Aufgabe ist gemäss der Erfindung dadurch gelöst, dass die Abschnitte jeweils ein in Längsrichtung des Rotorblattes sich erstreckendes Druckelement in Form eines Holmabschnittes aufweisen, und dass die Druckelemente aller Abschnitte in Formschluss aneinandergefügt und durch verankerte und einstellbare, in Blattrichtung wirkende Spannelemente miteinander verspannt sind.

Ein Rotorblatt gemäss der Erfindung unterscheidet sich von bekannten Konstruktionen einmal dadurch, dass auf einen selbständigen Holm als eigenes Bauteil für das Rotorblatt verzichtet wird und zum anderen durch die Verbindung der einzelnen Blattabschnitte mittels Spannelementen, die zwischen Verstellelementen an einem Zuganker an der Blattwurzel und Befestigungspunkten an den jeweiligen zu verspannenden Blattabschnitten bzw. an diesen anliegenden Zwischen- oder Zugankern eingespannt sind. Die Abschnitte können hierbei in einfachster Weise alle gemeinsam zwischen dem Zuganker an der Blattwurzel und einem weiteren oberen Zuganker an der Blattspitze eingespannt werden. Zweckmässigerweise wird jedoch eine Verspannung der Blattabschnitte einzeln etwa durch die erwähnten Zwischenanker gewählt; hierdurch kann die Spannkraft für jeden einzelnen Blattabschnitt individuell eingestellt werden. Mit der Einzelverspannung können unter anderem die Festigkeitseigenschaften des gesamten Blattes, aber auch die der einzelnen Abschnitte in gewissen Grenzen beeinflusst werden. Auf diese Weise kann das Rotorblatt optimal an die Anforderungen im Betrieb angepasst werden. Von den erwähnten Festigkeitseigenschaften hängt z.B. auch die Eigenfrequenz des Rotorblattes ab, die für den einwandfreien Betrieb einen ganz bestimmten Wert einnehmen muss. Diese Eigenfrequenz kann bereits durch geringe Abweichung in der Konstruktion des Blattes beeinflusst werden; ausserdem ist es nicht immer ausgeschlossen, dass das fertige Rotorblatt eine geringfügig andere Eigenfrequenz als die berechnete aufweist. Bei einem Rotorblatt gemäss der Erfindung kann die Eigenfrequenz durch entsprechende Dimensionierung der Verspannung trotzdem noch auf den gewünschten Wert eingestellt werden, ohne dass das Rotorblatt oder zumindest ein Abschnitt neu konzipiert und gebaut werden müsste.

Die Abschnitte des Rotorblattes gemäss der Erfindung können wegen der relativ kleinen Abmessungen in vorhandenen Fertigungsstätten hergestellt werden. Bei Blattgrössen von 60 Metern weisen die Blattabschnitte Längen zwischen etwa 6 und 12 Metern auf; Abschnitte solcher Längen können aus faserverstärkten Kunststoffen in bekannter Technologie hergestellt und auch in vorhandenen Autoklaven zur Verbesserung ihrer Festigkeitswerte heissgehärtet werden.

Da das Rotorblatt nur auf Zug und Druck durch Verspannung und Zentrifugalkräfte sowie auf Torsion durch aerodynamische Beanspruchungen belastet wird, werden zweckmässigerweise die Blattabschnitte als Sandwich-Konstruktionen aus einem Profilkern und darübergeschichteten Laminaten aus faserverstärkten Kunststoffen mit einheitlicher, in Zug- bzw. Druckrichtung liegender Faserrichtung ausgebildet. Selbstverständlich sind andere Konstruktionen mit anderen Materialien möglich, z.B. Harzkunststoffkonstruktionen mit billigen Füllstoffen wie etwa Asbestzement, Gas- oder Blähbetonkonstruktionen oder Metallkonstruktionen, soweit nur die Anforderungen an die Druckfestigkeit erfüllt werden. Der Profilkern kann etwa aus miteinander verbundenen Rechteckrohren aus Stahl oder auch aus faserverstärkten Kunststoffen bestehen. Der Kern kann ausgeschäumt werden. Auch die Ausbildung der Abschnitte in Form von ausgeschäumten Torsionsschalen ist möglich. Die Abschnitte brauchen nur über einen Teil ihres Querschnittes als Zug und Druck durch Verspannung und Zentrifugalkräfte aufnehmende Druckelemente ausgebildet sein, während die anderen Konturformen des Rotorblattes, z.B. die Blattfahnen als sekundäre, nicht tragende Teile ausgebildet werden. Derartige Konstruktionen sind bekannt und brauchen daher nicht näher erläutert zu werden.

Im Kern der erwähnten Sandwich-Konstruktion können die Spannelemente verlaufen, die vorzugsweise in Führungsrohren angeordnet sind. Diese Führungsrohre werden bei der Herstellung der Blattabschnitte eingelegt bzw. in Schaum eingebettet. Ist die Wandstärke der Blattabschnitte nicht für eine solche Einbettung ausreichend, so werden die Führungsrohre in inneren Kammern des Rotorblattes verlegt. Die Führungsrohre benachbarter Blattabschnitte werden durch einsteckbare Verbindungsbuchsen untereinander verbunden, die gleichzeitig die Blattabschnitte gegen Verdrehen sichern.

Ein Rotorblatt gemäss der Erfindung kann einfach hergestellt, transportiert und auch montiert werden. Beim Transport und der Montage ist es besonders vorteilhaft, dass hier nur mit Teilchen überschaubarer Länge und damit auch noch handlichen Gewichts gearbeitet werden kann.

Weitere Ausgestaltungen und Vorteile der Erfindung gehen aus den Unteransprüchen und der nachfolgenden Beschreibung hervor, in der die Erfindung in einem Ausführungsbeispiel für ein Rotorblatt anhand der Zeichnung näher erläutert ist. In der Zeichnung stellen dar:

Fig. 1 eine Ansicht eines Rotorblattes aus einzelnen Abschnitten gemäss der Erfindung;

Fig. 2 einen Querschnitt durch das Rotorblatt;

Fig. 3 einen Längsschnitt durch einen Teil eines Abschnittes des Rotorblattes und

Fig. 4 einen Teilquerschnitt durch einen Zuganker mit verspanntem Blattabschnitt für ein Rotorblatt gemäss der Erfindung.

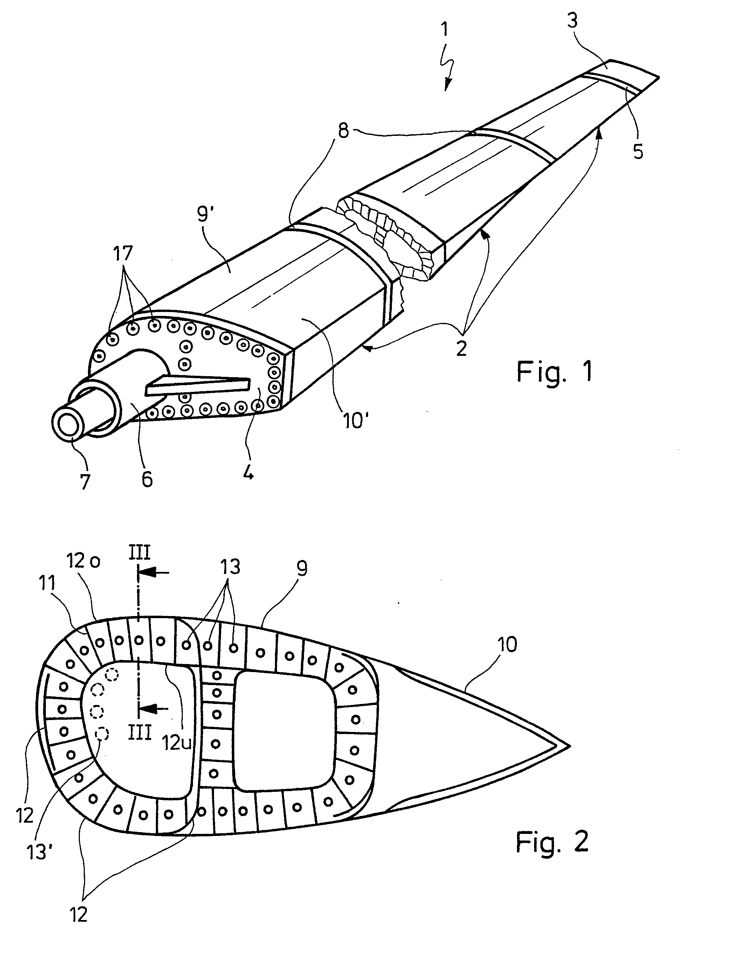

In Fig. 1 ist ein Rotorblatt 1 dargestellt, das aus mehreren Abschnitten 2 zusammengesetzt ist. An der Blattspitze ist ein Abschlusselement 3 vorgesehen. Die Abschnitte 2 sind durch einen unteren Zuganker 4 an der Blattwurzel und einen Zuganker 5 an der Blattspitze eingespannt. Am unteren Zuganker 4 ist ein Rohrstutzen 6 befestigt, in dem ein weiteres Rohr 7 gelagert ist, das mit einem hier nicht gezeigten Rotorkopf verbunden ist und über das der Anstellwinkel des Rotorblattes eingestellt werden kann. Die einzelnen Abschnitte des Rotorblattes stossen entweder direkt aneinander an, wie dies in dem aufgebrochenen Bereich des Rotorblattes in Fig. 1 dargestellt ist, oder es sind jeweils zwischen zwei Abschnitten Zwischenanker 8 vorgesehen. Die Verbindung zwischen den Abschnitten bzw. zwischen diesen und den Zwischenankern beruhen auf Formschluss. Die Abschnitte des Rotorblattes sind zwischen den Zugankern 4 und 5 bzw. den Zwischenankern 8 verspannt, wie dies noch erläutert wird.

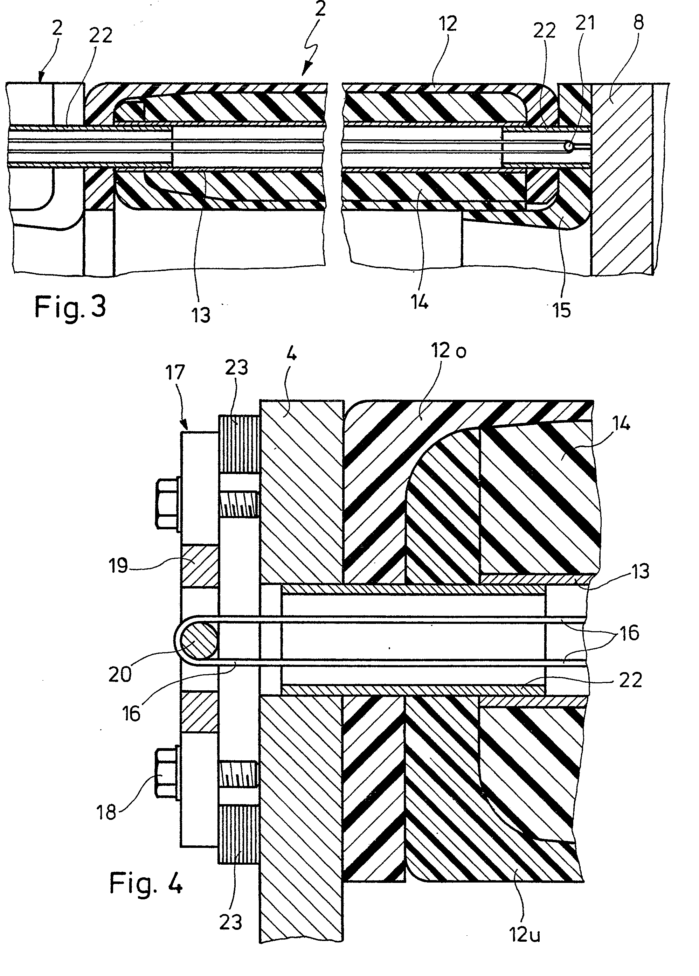

Die Abschnitte 2 des Rotorblattes sind im wesentlichen sogenannte Sandwich-Konstruktionen, wie dieses schematisch in Fig. 2 dargestellt ist. Der Abschnitt 2 des Rotorblattes weist ein zweikammriges Druckelement 9 auf, an das die Blattfahne 10 geklebt ist. Das Druckelement 9 besteht aus aneinandergefügten und miteinander verklebten Stützkernen 11, die mit Laminaten 12 aus faserverstärktem Kunststoff armiert werden; eine solche Technik ist bekannt und braucht hier nicht näher erläutert zu werden. In den Stützkernen 11 sind Führungsrohre 13 verlegt, wonach der Restraum in den Stützkernen z.B. ausgeschäumt wird. Die Stützkerne 11 können entweder Profile aus faserverstärkten Kunststoffen mit unidirektionaler Faserrichtung sein; es sind aber auch Metallprofile und Ähnliches denkbar. Anstelle der Stützkerne kann auch der Raum zwischen den Laminaten 12 mit einem Kunstharz ausgefüllt werden, wobei dann die Führungsrohre 13 direkt in dem Kunstharz verlegt sind. Eine solche Ausgestaltung ist in Fig. 4 dargestellt. Hier bilden die obere Laminatschicht 12o und die untere Laminatschicht 12u zusammen eine Torsionsschale, in der das Führungsrohr 13 verlegt ist und deren Restraum 14 ausgeschäumt ist. Die Abschlussflächen der einzelnen Segmente sind eben und werden, wie dies in Fig. 3 gezeigt ist, durch Endkappen 15 ebenfalls aus faserverstärkten Kunststoffen hergestellt, die mit der Torsionsschale verklebt sind.

In den Führungsrohren 13 laufen hochreissfeste Spannelemente 16, die z.B. ebenfalls aus Faserwerkstoffen ausgebildet sind; selbstverständlich sind auch Spannelemente aus anderen Materialien, so z.B. Stahldrähte, Stahlseile oder Stahllamellen möglich. In dem hier dargestellten Ausführungsbeispiel sind Faserwerkstoffe für die Spannelemente verwendet, die als Schlaufen ausgebildet sind. Das eine Ende der Schlaufe ist am unteren Zuganker 4 an einem Verstellelement 17 befestigt. Als Verstellelemente können Gewindespindeln, Flaschenzugelemente oder Kniehebel usw. verwendet werden. Bei dem Ausführungsbeispiel gemäss Fig. 4 wird eine über Stellschrauben 18 verstellbare Zugplatte 19 verwendet, die einen Bolzen 20 trägt, um den die Schlaufe des Spannelementes 16 gelegt ist. Die Stellschrauben 18 stützen sich auf den Zuganker 4 ab. Das andere Ende der Spannelemente 16 ist um einen Haltebolzen 21 gelegt, der entweder mit einer Endkappe 15 eines der Blattabschnitte 2 oder, wie in Fig. 3 dargestellt, mit einem Zwischenflansch 8 verbunden ist. An den Stossstellen zwischen den einzelnen Blattabschnitten 2 bzw. diesen und etwaigen Zwischenflanschen sind jeweils Verbindungsbuchsen 22 vorgesehen, durch die die Führungsrohre 13 zweier benachbarter Blattabschnitte miteinander verbunden werden. Diese Verbindungsbuchsen werden auch durch die Zwischenflansche 8 geführt, wenn an dieser Stelle keine Spannelemente befestigt, sondern lediglich zu einem nächsten Rotorblattabschnitt geführt werden. Die Verbindungsbuchsen 22 sichern gleichzeitig den Formschluss zwischen den Blattabschnitten 2 bzw. diesen und den Zwischenflanschen; sie dienen ferner dazu, zwischen einzelnen Blattabschnitten Schubkräfte zu übertragen und etwaige Torsionsbeanspruchungen des Blattes im Betrieb aufzunehmen. Anstelle der Verbindungsbuchsen 22 könnten auch die Führungsrohre über den Blattabschnitt bzw. die Zwischenanker herausgezogen werden und als Drehsicherung dienen.

Hierfür könnten selbstverständlich auch andere Konstruktionen dienen; z.B. könnten die Stirnflächen der Rotorblattabschnitte und der Zwischenflansche verzahnt werden; dies bedingt allerdings einen höheren Fertigungsaufwand.

Die einzelnen Rotorblattabschnitte 2 werden auf die geschilderte Weise durch eine Vielzahl von Spannelementen im Bereich der Druckelemente 9 der Abschnitte verbunden, wie dies in Fig. 1 durch die als Stellschrauben angedeuteten Verstellelemente 17 verdeutlicht wird.

Je nach den Anforderungen an die Steifigkeit und andere Eigenschaften des Rotorblattes können die einzelnen Abschnitte ohne Zwischenanker 8 lediglich zwischen dem unteren und oberen Zuganker 4 bzw. 5 eingespannt werden. Hier ergeben sich homogene Spannkräfte über alle Blattabschnitte, die lediglich durch die Profilausbildung dieser Abschnitte in gewissem Rahmen beeinflusst werden können. Wenn Zwischenanker 8 vorgesehen werden, ist die Spannkraft für einzelne Abschnitte an die jeweiligen Anforderungen anpassbar. Zum Beispiel wird durch zusätzliche Spannelemente auch die Eigenfrequenz des Rotorblattes bestimmt, die für einen einwandfreien Betrieb auf einen charakteristischen Wert eingestellt werden muss. Bei der Konstruktion eines Rotorblattes gemäss der Erfindung ist die Möglichkeit gegeben, durch entsprechende charakteristische Verspannung der einzelnen Abschnitte des Rotorblattes die Eigenfrequenz zu variieren und damit auf den optimalen Wert einzustellen. Durch die Einzelverspannung der Abschnitte können auch andere charakteristische Werte, so z.B. die Festigkeit des Blattes in bestimmten Bereichen variiert und optimal an die Verhältnisse angepasst werden. Auf jeden Fall muss die Spannkraft der Spannelemente grösser als die maximale Belastung des Rotorblattes aufgrund der Fliehkraft und der Biegung sein. Die Verstellelemente 17 können nach Einstellen der Spannkraft für die Spannelemente 16 entlastet werden, indem z.B. unter die Zugplatte 19 Keile 23 eingeführt werden, die die Spannkraft aufnehmen, so dass die Stellschrauben 18 im gespannten Zustand der Spannelemente 16 entlastet sind.

Bei dem dargestellten Ausführungsbeispiel sind die Führungsrohre für die Zugelemente innerhalb der Sandwich-Struktur des Rotorblattes gelegen. Bei kleineren Rotorblättern mit dünnen Wandstärken ist es ebenfalls möglich, die Führungsrohre bzw. Führungskanäle für die Spannelemente in die Innenkammern der Druckelemente 9 zu legen, wie dieses schematisch in Fig. 2 durch die gepunktet gezeichneten Führungskanäle 13' angedeutet ist. In besonders gelagerten Fällen können auch zur Erhöhung der Steifigkeit des Rotorblattes die Spannelemente ausserhalb der Blattkontur in aerodynamisch nicht störenden Bereich angebracht werden; es kann hierbei auch zusätzlich Auftrieb gewonnen werden.

Es sei noch darauf hingewiesen, dass der Querschnitt des Rotorblattes nicht über die gesamte Länge des Blattes die gleiche Form aufweist, wie sie in Fig. 2 dargestellt ist; wie aus Fig. 1 hervorgeht, verjüngt sich das Blatt zur Spitze hin, wobei die ersten Abschnitte 2 eine gerade Rückfläche und erst die Abschnitte im äusseren Bereich des Rotorblattes eine Blattfahne, wie in Fig. 2 dargestellt, aufweisen. Die Ausbildung der Rotorblätter und die Verteilung von tragenden Druckelementen 9 und nicht in Zug- bzw. Druckrichtung belasteten Sekundärteilen, wie Blattfahnen oder ähnlichem hängt von den zu erfüllenden Anforderungen an das Rotorblatt im Betrieb ab. So ist es denkbar, dass das Druckelement z.B. lediglich einkammerig ausgebildet ist und dass auch die Zuganker 4 und 5 nur diesen Bereich des Blattes abdecken. In Fig. 1 ist mit 9' der vordere Teil des Rotorblattes bezeichnet, der als Druckelement ausgeführt ist. Der rückwärtige mit 10' bezeichnete Teil sind nicht auf Zug- oder Druck beanspruchte Sekundärteile. Die Zuganker 4 und 5 und die Zwischenanker 8 erstrecken sich über den gesamten Blattquerschnitt, wobei auch im Bereich der Sekundärteile 10' an den Zugankern Verstellelemente 17 vorgesehen sein können, wobei dann, wie oben erwähnt, die zugeordneten Spannelemente ausserhalb der Druckelemente 9' verlaufen.

Das Rotorblatt verjüngt sich, wie bereits erwähnt, zur Blattspitze hin. Die Führungsrohre 13 für die Spannelemente 16 folgen im wesentlichen der Aussenkontur des Rotorblattes und laufen demnach nicht parallel, sondern bilden insgesamt ein leicht konisch verlaufendes Bündel. Dementsprechend laufen auch die Spannelemente nicht parallel, sondern nehmen gegeneinander einen gewissen Winkel ein. Dies hat den Vorteil, dass durch die Spannelemente auch auf das Rotorblatt wirkende Knickkräfte aufgenommen werden.

Das beschriebene Rotorblatt kann direkt am Aufstellungsort zusammengesetzt und montiert werden. Hierzu wird zunächst am Mast der hier nicht gezeigte Rotorkopf mit Rohr 7, Rohrstutzen 6 und Zuganker 4 befestigt. Die einzelnen Blattabschnitte 2 können dann über die Spannelemente 16 hochgezogen, und wenn notwendig, mit Zwischenankern 8 verspannt werden. Die Durchführungen für die Spannelemente am Zuganker bzw. an den Blattabschnitten und den Zwischenankern, z.B. im Bereich der Verbindungsbuchsen 22, können mit einer Gleitschicht aus Polytetrafluoräthylen ausgekleidet sein, um so etwaige Reibungskräfte zwischen den Spannelementen und diesen Durchführungen beim Hochziehen zu verringern.

Auch Rotorblätter grosser Ausmasse können, wenn sie gemäss der Erfindung ausgebildet werden, in bereits vorhandenen Fertigungseinrichtungen hergestellt und mit einem relativ geringen Aufwand zusammengesetzt bzw. montiert werden.

**Patentansprüche**

1. Aus einzelnen Abschnitten gefertigtes Rotorblatt, in dem die Abschnitte (2) jeweils ein in Längsrichtung des Rotorblattes (1) sich erstreckendes Druckelement (9) in Form eines Holmabschnittes aufweisen, dadurch gekennzeichnet, dass die Druckelemente aller Abschnitte in Formschluss aneinandergefügt und durch verankerte und einstellbare, in Blattrichtung wirkende Spannelemente (16) miteinander verspannt sind.

2. Rotorblatt nach Anspruch 1, dadurch gekennzeichnet, dass die Abschnitte (2) des Rotorblattes (1) zwischen zwei Zugankern (4, 5) an Blattwurzel und Blattspitze eingespannt sind.

3. Rotorblatt nach Anspruch 2, dadurch gekennzeichnet, dass die Zuganker (4, 5) den Querschnitt des Rotorblattes (1, 2) aufweisen.

4. Rotorblatt nach einem der Ansprüche 2 und 3, dadurch gekennzeichnet, dass zum Verspannen einzelner Blattabschnitte (2) des Rotorblattes (1) zwischen den Blattabschnitten (2) Zwischenanker (8) vorgesehen sind.

5. Rotorblatt nach einem der Ansprüche 2 bis 4, dadurch gekennzeichnet, dass die einzelnen Blattabschnitte (2) sowie Zug- und Zwischenanker (4, 5, 8) ebene Abschlussflächen (15) aufweisen.

6. Rotorblatt nach einem der Ansprüche 2 bis 5, dadurch gekennzeichnet, dass benachbarte Blattabschnitte (2) sowie Zug- und Zwischenanker (4, 5, 8) durch Formstücke (Verbindungsbuchsen 22) gegen Verdrehen gesichert sind.

7. Rotorblatt nach einem der vorhergehenden Ansprüche, dadurch gekennzeichnet, dass die Spannelemente (16) zur Einstellung der Spannkraft mit Verstellelementen (17) an einem unteren Zuganker (4) an der Blattwurzel und an ihrem anderen Ende mit festen Befestigungspunkten (21) an einem zu verspannenden Blattabschnitt bzw. einem benachbarten Zwischenanker (8) oder einem oberen Zuganker (5) an der Blattspitze verbunden sind.

8. Rotorblatt nach Anspruch 7, dadurch gekennzeichnet, dass die Verstellelemente (17) nach Einstellung der Zugkraft entlastbar sind (durch Keile 23).

9. Rotorblatt nach einem der Ansprüche 7 und 8, dadurch gekennzeichnet, dass die Verstellelemente (17) Gewindespindeln (18), Flaschenzugelemente oder Kniehebel aufweisen.

10. Rotorblatt nach einem der Ansprüche 7 bis 9, dadurch gekennzeichnet, dass die Spannelemente (16) Bänderschlaufen aus faserverstärkten Kunststoffen mit unidirektionalen Fasern sind.

11. Rotorblatt nach einem der vorhergehenden Ansprüche, dadurch gekennzeichnet, dass die Spannelemente (16) mit der Längsachse des Rotorblattes (1) einen kleinen spitzen Winkel bilden.

12. Rotorblatt nach einem der vorhergehenden Ansprüche, dadurch gekennzeichnet, dass die Spannelemente (16) in innerhalb des Rotorblattes (2) verlaufenden Führungsrohren (13) geführt sind.

13. Rotorblatt nach Anspruch 12, dadurch gekennzeichnet, dass die Führungsrohre (13) zur Längsachse des Rotorblattes (1) einen kleinen spitzen Winkel einnehmen und in Richtung auf die Spitze (3) des Rotorblattes (1) aufeinander zu laufen.

14. Rotorblatt nach einem der Ansprüche 12 und 13, dadurch gekennzeichnet, dass die Führungsrohre (13) aneinandergrenzender Blattabschnitte (2) durch Verbindungsbuchsen (22) miteinander verbunden sind.

15. Rotorblatt nach einem der vorhergehenden Ansprüche, dadurch gekennzeichnet, dass die Abschnitte (2) des Rotorblattes (1) Sandwich-Konstruktionen aus Kern (11) und darüberliegenden Laminaten (12) aus faserverstärkten Kunststoffen sind.

16. Rotorblatt nach Anspruch 15, dadurch gekennzeichnet, dass die Spannelemente (16) im Kern (11) der Blattabschnitte (2) verlaufen.

17. Rotorblatt nach einem der Ansprüche 15 und 16, dadurch gekennzeichnet, dass im Kern der Sandwich-Konstruktion des Rotorblattes Führungsrohre (13) für die Spannelemente (16) angeordnet, vorzugsweise eingeschäumt sind.

18. Rotorblatt nach einem der Ansprüche 16 und 17, dadurch gekennzeichnet, dass Führungsrohre (13') für die Spannelemente (16) in Innenkammern der als Sandwich-Konstruktion ausgebildeten Abschnitte angeordnet sind.

19. Rotorblatt nach einem der vorhergehenden Ansprüche, dadurch gekennzeichnet, dass zumindest einige Spannelemente (16) ausserhalb des Rotorblattes (1) geführt sind.

20. Rotorblatt nach einem der vorhergehenden Ansprüche, dadurch gekennzeichnet, dass sowohl Spannelemente (16) als auch Druckelemente (9) der Rotorblattabschnitte (2) zu Wartungs- und Reperaturzwecken einzeln auswechselbar sind.

21. Rotorblatt nach einem der vorhergehenden Ansprüche, dadurch gekennzeichnet, dass die Spannelemente (16) derart gestaltet sind, dass sie als Montagehilfen beim Zusammenbau des Rotorblattes einsetzbar sind.

**Claims**

1. A rotor blade constructed of individual sections, in which the sections (2) each comprise a pressure element (9) extending in the longitudinal direction of the rotor blade (1) and in the form of a spar portion, characterized in that the pressure elements of all of the sections are fitted together in form-closing arrangement and are braced relative to one another by anchored and adjustable tension elements (16) acting in the blade direction.

2. A rotor blade according to claim 1, characterized in that the sections (2) of the rotor blade (1) are clamped between two tension anchors (4, 5) at the blade root and the blade tip.

3. A rotor blade according to claim 2, characterized in that the tension anchors (4, 5) have the cross-section of the rotor blade (1, 2).

4. A rotor blade according to one of claims 2 and 3, characterized in that, for the bracing of individual blade sections (2) of the rotor blade (1), intermediate stays (8) are provided between the blade sections (2).

5. A rotor blade according to one of claims 2 to 4, characterized in that the individual blade sections (2) as well as the tension and intermediate stays (4, 5, 8) have flat terminal surfaces (15).

6. A rotor blade according to one of claims 2 to 5, characterized in that adjacent blade sections (2) as well as tension and intermediate stays (4, 5, 8) are secured against twisting by shaped parts (connection bushes 22).

7. A rotor blade according to one of the preceding claims, characterized in that the tension elements (16), for the adjustment of the tension force, are connected to adjusting elements (17) on a lower tension anchor (4) at the blade root and are connected at their other end to secure fastening points (21) respectively on a blade section to be braced or an adjacent intermediate stay (8) on an upper tension anchor (5) at the blade tip.

8. A rotor blade according to claim 7, characterized in that the adjusting elements (17) are relievable (by wedges 23) after adjustment of the tensile force.

9. A rotor blade according to one of claims 7 and 8, characterized in that the adjusting elements (17) have threaded spindles (18), pulley block elements or elbow levers.

10. A rotor blade according to one of claims 7 to 9, characterized in that the tension elements (16) are band loops made of fibre-reinforced plastics material having unidirectional fibres.

11. A rotor blade according to one of the preceding claims, characterized in that the tensioning elements (16) form a small acute angle with the longitudinal axis of the rotor blade (1).

12. A rotor blade according to one of the preceding claims, characterized in that the tension elements (16) are guided in guide tubes (13) extending inside the rotor blade (2).

13. A rotor blade according to claim 12, characterized in that the guide tubes (13) form a small acute angle relative to the longitudinal axis of the rotor blade (1) and run towards one another in the direction of the tip (3) of the rotor blade (1).

14. A rotor blade according to one of claims 12 and 13, characterized in that the guide tubes (13) of contiguous blade portions (2) are connected together by connection bushes (22).

15. A rotor blade according to one of the preceding claims, characterized in that the sections (2) of the rotor blade (1) are sandwich constructions consisting of a core (11) and superjacent laminates (12) made of fibre-reinforced plastics materials.

16. A rotor blade according to claim 15, characterized in that the tension elements (16) extend in the core (11) of the blade sections (2).

17. A rotor blade according to one of claims 15 and 16, characterized in that guide tubes (13) for the tension elements (16) are arranged, are preferably foamed-in, in the core of the sandwich construction of the rotor blade.

18. A rotor blade according to one of claims 16 and 17, characterized in that guide tubes (13') for the tension elements (16) are arranged in internal chambers of the sections which are designed as a sandwich construction.

19. A rotor blade according to one of the preceding claims, characterized in that at least some tension elements (16) are conducted outside the rotor blade (1).

20. A rotor blade according to one of the preceding claims, characterized in that both tension elements (16) and pressure elements (9) of the rotor blade sections (2) are individually exchangeable for maintenance and repair purposes.

21. A rotor blade according to one of the preceding claims, characterized in that the tension elements (16) are formed in such a way that they are usable as fitting aids upon the assembly of the rotor blade.

**Revendications**

1. Pale de rotor faite de tronçons individuels (2) comportant chacun un élément de compression (9) sous forme de tronçon de longeron s'étendant en direction longitudinale de ladite pale de rotor (1), caractérisée par le fait que les éléments de compression de tous les tronçons sont aboutés les uns aux autres en assemblage par interpénétration et serrés ensemble par des éléments de serrage (16) ancrés et réglables qui agissent suivant la direction de la pale.

2. Pale de rotor selon la revendication 1, caractérisée par le fait que les tronçons (2) de ladite pale de rotor (1) sont serrés entre deux plaques à tirants, l'une sur le bout, l'autre sur le pied, de la pale.

3. Pale de rotor selon la revendication 2, caractérisée par le fait que les plaques à tirants (4, 5) ont la même section que ladite pale (1, 2).

4. Pale de rotor selon l'une quelconque des revendications 2 ou 3, caractérisée par le fait que des plaques intermédiaires (8) sont établies entre les tronçons de pale (2) en vue du serrage de ces derniers.

5. Pale de rotor selon l'une quelconque des revendications 2 à 4, caractérisée par le fait que les tronçons individuels (2) de ladite pale ainsi que les plaques à tirants ou intermédiaires (4, 5, 8) présentent des surfaces terminales (15) planes.

6. Pale de rotor selon l'une quelconque des revendications 2 à 5, caractérisée par le fait que les tronçons de pale (2) voisins les uns des autres et les plaques à tirants et intermédiaires (4, 5, 8) voisines les unes des autres sont empêchés de se tordre par des pièces de forme telles que des manchons de jonction (22).

7. Pale de rotor selon l'une quelconque des revendications 1 à 6, caractérisée par le fait que, pour régler la force de serrage, les éléments de serrage (16) sont reliés à des éléments de réglage (17) placés sur une plaque à tirants inférieure (4) voisine du pied de la pale et, sur leur autre extrémité, à des points de fixation fixes (21) placés sur un tronçon de pale à serrer, ou une plaque intermédiaire (8) voisine, ou sur une plaque à tirants supérieure (5) voisine du bout de la pale.

8. Pale de rotor selon la revendication 7, caractérisée par le fait que les éléments de réglage (17) sont déchargeables, par exemple par des cales (23), après réglage de la force de traction.

9. Pale de rotor selon l'une quelconque des revendications 7 ou 8, caractérisée par le fait que les éléments de réglage (17) comportent des broches filetées (18), des éléments de palan ou des leviers à genouillère.

10. Pale de rotor selon l'une quelconque des revendications 7 à 9, caractérisée par le fait que les éléments de serrage (16) sont des boucles de ruban en matières plastiques renforcées de fibres unidirectionnelles.

11. Pale de rotor selon l'une quelconque des revendications 1 à 10, caractérisée par le fait que les éléments de serrage (16) forment un petit angle aigu avec l'axe longitudinal de ladite pale de rotor (1).

12. Pale de rotor selon l'une quelconque des revendications 1 à 11, caractérisée par le fait que les éléments de serrage (16) sont conduits dans des tubes-guides (13) courant à l'intérieur de ladite pale de rotor (2).

13. Pale de rotor selon la revendication 12, caractérisée par le fait que les tubes-guides (13) forment un petit angle aigu avec l'axe longitudinal de ladite pale (1) et convergent entre eux en direction du bout (13) de cette dernière.

14. Pale de rotor selon l'une quelconque des revendications 12 ou 13, caractérisée par le fait que les tubes-guides (13) de tronçons de pale (2) contigus sont reliés entre eux par des manchons de jonction (22).

15. Pale de rotor selon l'une quelconque des revendications 1 à 14, caractérisée par le fait que les tronçons (2) de ladite pale de rotor (1) sont des constructions en sandwich formés d'un noyau (11) et de stratifiés (12) placés au-dessus de ce dernier et constitués par des matières plastiques renforcées de fibres.

16. Pale de rotor selon la revendication 15, caractérisée par le fait que les éléments de serrage (16) courent dans le noyau (11) des tronçons de pale (2).

17. Pale de rotor selon l'une quelconque des revendications 15 ou 16, caractérisée par le fait que des tubes-guides (13) pour les éléments de serrage (16) sont placés, de préférence noyés dans une mousse, dans le noyau de la construction en sandwich de la pale de rotor.

18. Pale de rotor selon l'une quelconque des revendications 16 ou 17, caractérisée par le fait que des tubes-guides (13') pour les éléments de serrage (16) sont placés dans des chambres intérieures des tronçons agencés en construction en sandwich.

19. Pale de rotor selon l'une quelconque des revendications 1 à 18, caractérisée par le fait qu'au moins quelques éléments de serrage (16) sont conduits extérieurement à ladite pale de rotor (1).

20. Pale de rotor selon l'une quelconque des revendications 1 à 19, caractérisée par le fait qu'aussi bien des éléments de serrage (16) que des éléments de compression (9) des tronçons de pale (2) sont échangeables individuellement à des fins d'entretien et de réparation.

21. Pale de rotor selon l'une quelconque des revendications 1 à 20, caractérisée par le fait que les éléments de serrage (16) sont établis de façon à être utilisables en auxiliaires de montage lors de l'assemblage de ladite pale de rotor.

Fig. 1

Fig. 2

Fig. 3

Fig. 4